# EUROPEAN PATENT APPLICATION

(11) **EP 2 702 865 A1**
(43) Date of publication of application: **05.03.2014**
(21) Application number: 12181988.2
(22) Date of filing: 28.08.2012
(51) Int. Cl.: A01G 23/083

(54) **Harvester head and method in processing tree trunks**

(71) Applicant: Lako Forest OY Ltd, 21160 Merimasku (FI)
(72) Inventor: Lastunen, Turkka, 20900 Turku (FI); Lastunen, Jasper, 20900 Turku (FI); Lastunen, Rasmus, 20900 Turku (FI)
(74) Representative: Suominen, Kaisa Liisa

(57) **Abstract**

A harvester head (1), comprising a frame part (10) and tree processing means (2, 3, 4, 5) for gripping a tree trunk (T), for feeding the tree trunk (T) in a longitudinal direction, for debarking and for cross cutting the tree trunk. The harvester head (1) is adapted for processing at least two trees (T) simultaneously, the harvester head is provided with a collector arm (23) of dual function, both gripping function for gripping and holding a tree (T) during a collecting phase and debarking function, the collector arm (23) is provided with a debarking knife (30) for debarking at least two consequently collected trees (T) at an area between the two trees (T). The invention relates also to a corresponding method in processing at least two tree trunks simultaneously with a harvester head.

## Description

The present invention relates to a field of harvester heads for processing trees. More specifically, the present invention relates to a harvester head comprising a frame part and tree processing means for gripping a tree trunk, for feeding the tree trunk in a longitudinal direction, for debarking and for cross cutting the tree trunk. The present invention relates also to a method in processing at least two tree trunks simultaneously with a harvester head.

In operation a harvester head is used for gripping, processing and cross cutting trees in forests. Basically the process cycle starts when an operator of the machine steers the harvester head to grip a tree. Next step is cutting the tree, felling it down and then the tree is moved through the harvester head so that bark and possibly limbs are removed. The tree trunk is cross cut to the length as desired or needed, for example to 3 meter, to 4.6 meter or to whole tree length trunks. Another option is to process already felled trees, for example in tree plantations or in slope forests where the trees are felled separately and processed afterwards.

As the field of tree harvesting business follows the needs of the industry using the harvested wood, there may arise new needs to process the tree in a certain manner. One clear change in the business is the increasing use of harvester type machinery for collecting wood for energy production. As the costs of using the harvester machinery are normally calculated per produced volume of wood [€/m³] or per produced ton [€/tn], the calculated efficiency may suffer, if the trees are small and thus the of volume or mass of the collected wood is small. However, when the forest is young and there is high density of trees growing on certain area, it is of forest economy's interest to reduce the number of growing trees so that the remaining trees have enough space, nutrient and sun light to grow faster than in over dense forest. In this kind of young forest there are both pulp-grade trees and energy-grade trees, which need to be harvested.

The harvester heads of harvesting machines are typically designed according to the application target to function in an optimal manner in certain use conditions and in a certain type of tree stand to be processed. One of the most typical differentiating factors between harvester heads is their characteristic processing capacity, which can be determined by for example according to the maximum and minimum diameter of the tree, the maximum mass, the number of trunks to be processed simultaneously, the amount of branches of the trunks or corresponding factors. The processing of relatively small trees, such as preliminary thinning trees, is for example not worthwhile doing with a harvester head meant for final felling of large trees, because already moving such an XL-sized harvester head in a dense forest is difficult and time-consuming and consumes an unnecessary amount of energy. Correspondingly the other way around, it is not worthwhile using a harvester head meant for preliminary thinning or other thinning felling performed relatively early in the life span of a tree for the final felling of large trees, because the properties and limits of the harvester head in question may be reached in many ways, whereby in a worst case scenario the work safety may be endangered due to device failure in a life-threatening manner. In tree processing also productivity is important, i.e. the size of the harvester head needs to be optimised according to the tree and conditions. Additionally environmental aspects, such as the integrity of the remaining tree stand, damages to the forest floor etc. can better be comprehensively taken into account when using machines of a correct size.

The objective of the present invention is to provide an efficient method and suitable harvester head for harvesting young to intermediate aged forests, especially where there are both pulp grade and energy grade trees. One objective is to increase the speed of tree trunk processing with the harvester head as calculated by factor [m³/h] in said young forests. One objective is to provide a method and a harvester head that can be used for both standing trees and already felled trees. Another objective is also to provide an efficient method for processing trees by debarking / delimbing the tree trunks so that especially when the wood is very wet, the drying begins immediately after felling and thus reduces transportation costs due to reduced weight of the trunks. In certain ambient conditions this also has a positive effect to the quality of the product by hindering the biological deterioration of the wood. Also the bark is more difficult to remove if it has dried, i.e. the water content in cambium and phloem layers has diminished.

The harvester head according to the present invention is characterized in that the harvester head is adapted for processing at least two trees simultaneously, the harvester head is provided with a collector arm of dual function, both gripping function for gripping and holding a tree during a collecting phase and debarking function, the collector arm is provided with a debarking knife for debarking at least two consequently collected trees at an area between the two trees.

The method of present invention is characterized by
- steering the harvester head frame base in the proximity of a tree trunk,
- gripping the trunk of the tree by a collector arm,
- moving the harvester head holding the tree trunk to the proximity of the selected following tree,
- closing a feed roller arm and thus carrying and holding the tree trunks so that the collector arm remains between the trees,
- feeding the tree trunks simultaneously in longitudinal direction,
- debarking the trunks with debarking knives located on the inner periphery of the harvester head and with the collector arm provided with a debarking knife and located between the tree trunks,
- cross cutting the tree trunks to a desired length.

A harvester head comprising a frame part and tree processing means for gripping a tree trunk, for feeding the tree trunk in a longitudinal direction, for debarking and for cross cutting the tree trunk is commonly used in the harvesting industry. Especially in processing those tree species which are normally debarked in the initial phase i.e. on the field, forest etc., such as acacia and eucalyptus use this kind of machinery. Due to many reasons, the demand for cost efficiency has raised significantly. Also the labouring cost has increased. As the small volume tree handling has been quite inefficient due to the small volume or mass of those trees, the applicant has noted that the efficiency of the harvesting may be improved if also those small volume trees could be handled efficiently.

The present invention where the harvester head is adapted for processing at least two trees simultaneously, the harvester head is provided with a collector arm of dual function, both gripping function for gripping and holding a tree during a collecting phase and debarking function, the collector arm is provided with a debarking knife for debarking at least two consequently collected trees at an area between the two trees, meets the objectives of the invention. This brings significant improvement in efficiency when processing relatively small volume trees. The harvester head handling properties remains agile, it is easy to operate in the forest and if calculated in [m³/h] or [tn/h], the difference is significant. This also reduces the amount of fuel consumed by the harvester machinery, which may be of critical importance, since the working areas may be far away from fuel sources. Also the debarking result is the same or may be even improved due to the location of the collector arm debarking knife if compared to single tree processing or conventional multiple tree processing where the debarking is not normally among the top priorities.

According to an embodiment, the collector arm is provided with a debarking knife with debarking function so that there is a cutting edge for cutting bark and limbs, but also a friction surface to enable forming of pressure between the bark surface of the tree trunk and the debarking knife for pressure debarking. This provides an efficient effect to the debarking, since the combination of these methods releases the bark especially well and does not consume excessive amount of energy. By using only cutting edge, it is difficult to get good area coverage on debarking and by using only pressure debarking, the amount of energy needed for feeding the trunks or logs through the harvester head is much bigger. Still according to an embodiment, the feed roller is provided with a surface pattern, such as spiral like pattern, causing the tree trunk(s) to rotate axially or other manner causing an axial torque to the surface of the tree trunk bark when fed by the feed roller or like, such as feed track or feed stroking means. This improves even more the debarking efficiency and area coverage. Here the area coverage means the relation between debarked surface and the surface still having the bark or its remainders on the trunk after processing.

The method in processing at least two tree trunks simultaneously with a harvester head comprises following steps. Depending on the tree sizes and distances between the trees etc., more than two trees can be processed simultaneously, for example 3, 4 or 5 trees.
- Steering the harvester head frame base in the proximity of a tree trunk. This is normally done by the operator of the machine. The operator selects the first tree to be processed, possible directions, processing modes etc. depending on the situation.
- Gripping the trunk of the tree by a collector arm. This may be selected by the operator or by the processing program set to a multi trunk processing mode and having information that there will be a following tree or trees before processing.
- Moving the harvester head holding the tree trunk to the proximity of the selected following tree. The operator selects the following tree and steers the harvester head close to it or in contact with it. In case of multiple trees processed simultaneously, this step is repeated.
- Closing a feed roller arm and thus carrying and holding the tree trunks so that the collector arm remains between the trees. The feed roller arm is typically closed last, to be prepared for feeding. However, it may also be closed in between the collecting, if the situation requires so, for example to get a better grip on the trees.
- Feeding the tree trunks simultaneously in their longitudinal direction. Feed rollers in the feed roller arm and in the harvester head frame are used for feeding the trunks through the harvester head,
- Debarking the trunks with debarking knives located on the inner periphery of the harvester head and with the collector arm provided with a debarking knife and located between the tree trunks. When the trunks are moving through the harvester head, the debarking knives remove the bark off the trunk.
- Cross cutting the tree trunks to a desired length. This may be done by suitable means, such as chain saw blade, guillotine and like.

The previous process can be performed both for standing trees and for already felled trees. When standing trees are processed, after gripping the tree trunk is cut and when the number of trees to be processed simultaneously is collected to the harvester head, the trees are felled by using a harvester head tilt system and then the tree trunks are processed i.e. debarked and cross cut to a desired length. Correspondingly, when processing already felled trees, after gripping a tree trunk, the gripping procedure is repeated until the number of trees to be processed simultaneously is collected to the harvester head, then the tree trunks are processed i.e. debarked and cross cut to a desired length.

The selection of previous operating modes depend on the forest or plantation circumstances, customary working methods etc.. For example, on mountain areas the trees are frequently felled manually, then skidded to a suitable working area and then the machine takes care of the processing. One particularly efficient method for utilizing the present invention is at eucalyptus plantation. The eucalyptus grows very easily from old stumps and if there is two, three or four young trees left to grow from a stump, with the current method they can be very efficiently collected and processed. With current harvester head and method it takes only very short time to get a group of standing eucalyptus trees processed, i.e. to have debarked trunks cut to desired length and ready for transportation. The harvester head may even be used when selecting for example two out of the four trees growing from that stump and leave the remaining two trees to grow bigger.

In the following the present harvester head and the corresponding method is explained in more detail in reference to the following figures where,
- fig. 1 presents an overview of the harvester head in "ready to process" -stage, but before felling the trees,
- fig. 2A and 2B present an embodiment of the collector arm,
- figs. 3 to 7 presents an example of the process steps of the method,
- fig. 8 presents an embodiment of processing multiple trees simultaneously,
- fig. 9 presents a embodiment of processing single tree.

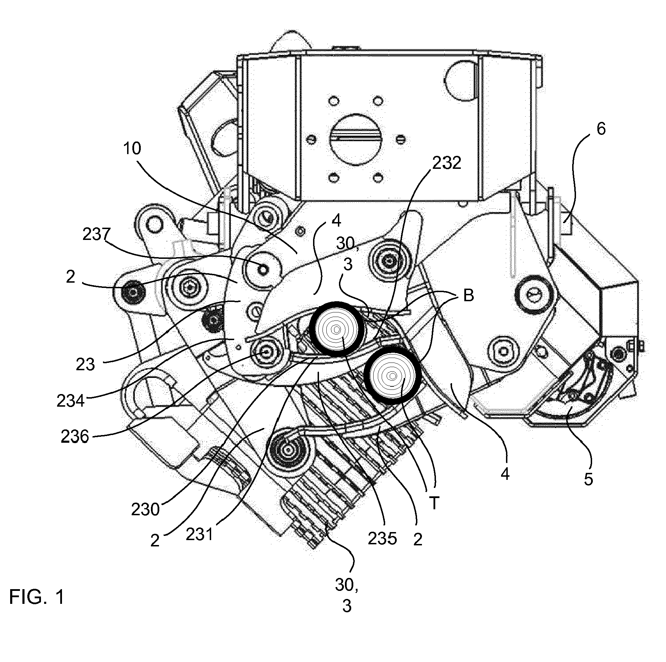

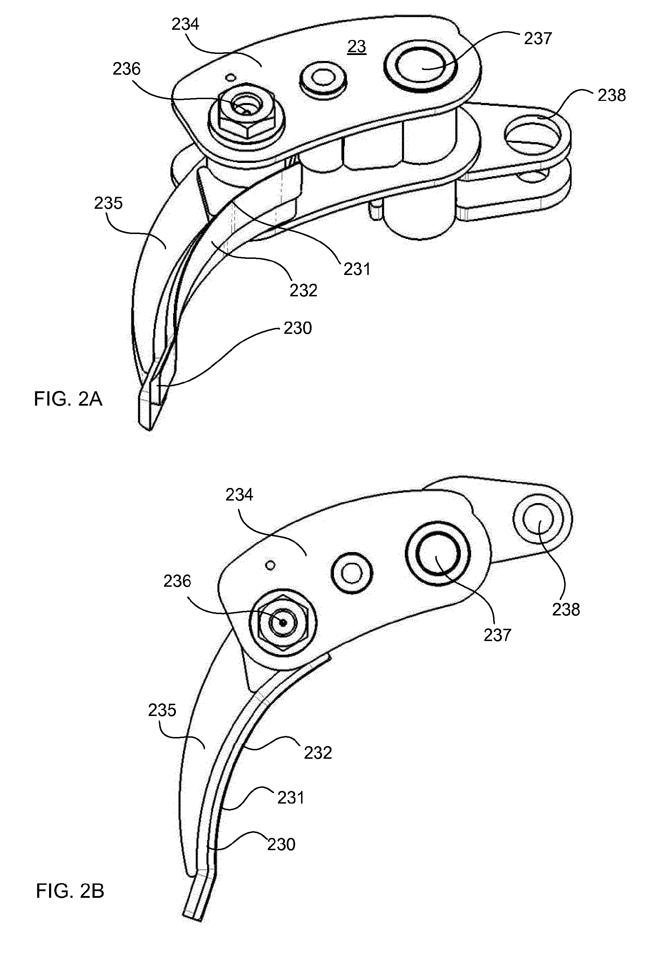

In fig. 1 it is presented a harvester head 1, comprising a frame part 10 and tree processing means 2, 3, 4, 5 for gripping a tree trunk T, for feeding the tree trunk T in a longitudinal direction by feed rollers 30, for debarking and for cross cutting the tree trunk. The harvester head 1 is adapted for processing at least two trees T simultaneously, the harvester head is provided with a collector arm 23 of dual function, both gripping function for gripping and holding a tree T during a collecting phase and debarking function, the collector arm 23 is provided with a debarking knife 230 for debarking at least two consequently collected trees T at an area between the two trees T. The collector arm 23 is provided with a debarking knife 230 with a debarking function so that there is a cutting edge 231 for cutting bark and limbs, but also a friction surface 232 to enable forming of pressure between the bark B surface of the tree trunk T and the debarking knife 30, 32 for pressure debarking. In fig. 1 the harvester head is shown in an upright position (tilt system 6 up), i.e. as it is when gripped to a standing tree but not yet felled the tree(s). Collector arm 23 and its parts 231, 232, 234, 235, 236, 237, 238 are explained in more detail with figures 2A and 2B.

In fig. 2A and fig. 2B it is presented an embodiment of the collector arm 23. The collector arm 23 is provided with a debarking knife 230 with a debarking function so that there is a cutting edge 231 for cutting bark B and limbs, but also a friction surface 232 to enable forming of pressure between the bark B surface of the tree trunk T and the debarking knife 230 for pressure debarking. The collector arm comprises two sections, a base section 234 pivoted to the frame part 10 (as shown in fig 1) and a knife section 235 pivoted to the base section 234. This gives possibility that the collector arm 23 up to the knife section 235 may be positioned in almost any position and the diameters of the tree trunks to be processed have a very little effect on the debarking result and also the gripping is easy. A pivot point 236 between the base section 234 and the knife section 235 is for example a suitable axle. The collector arm 23 is suitably provided with an actuator (not shown) over the pivot point 236 between the base section 234 and the knife section 235 so that the collector arm 23 and the knife section 235 are controllably manoeuvrable. The base section 234 is pivotable in relation to harvester head frame part 10 over another pivot point 237. Suitably the base section 234 is connected to an actuator, such as hydraulic cylinder, spring, their combination or like via a bracket 238. In fig. 2B it is shown the same embodiment as in fig. 2A, but from a top view.

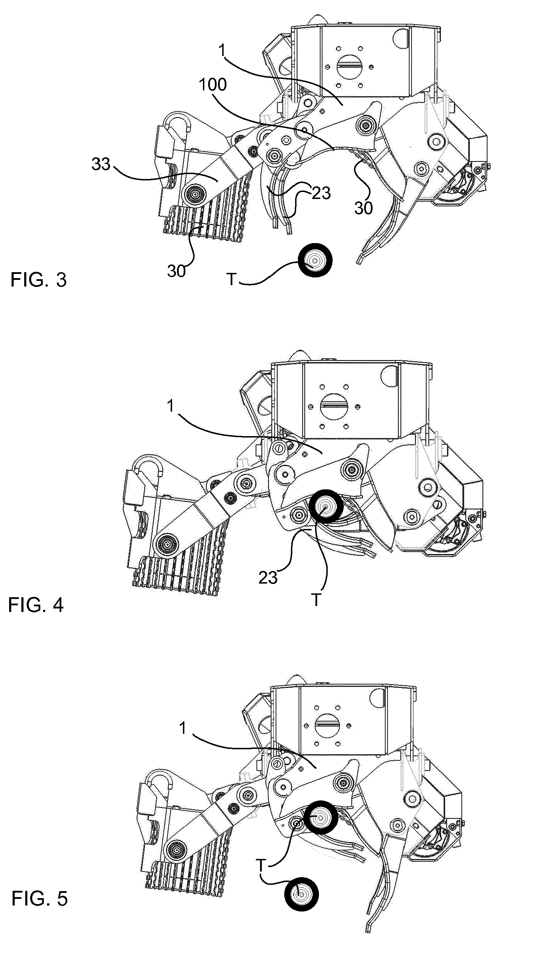

In figures 3 to 7 it is presented a schematic overview of the steps in the method in processing at least two tree trunks simultaneously. In fig. 3 the harvester head 1 is approaching a tree T to be harvested / processed - an operator is steering the harvester head frame base 100 in the proximity of a tree trunk T. All the arms including the collector arm(s) 23 and feed roller arm 33 are wide open. The harvester head 1 may be provided with several collector arms 23 for processing multiple trees T simultaneously.

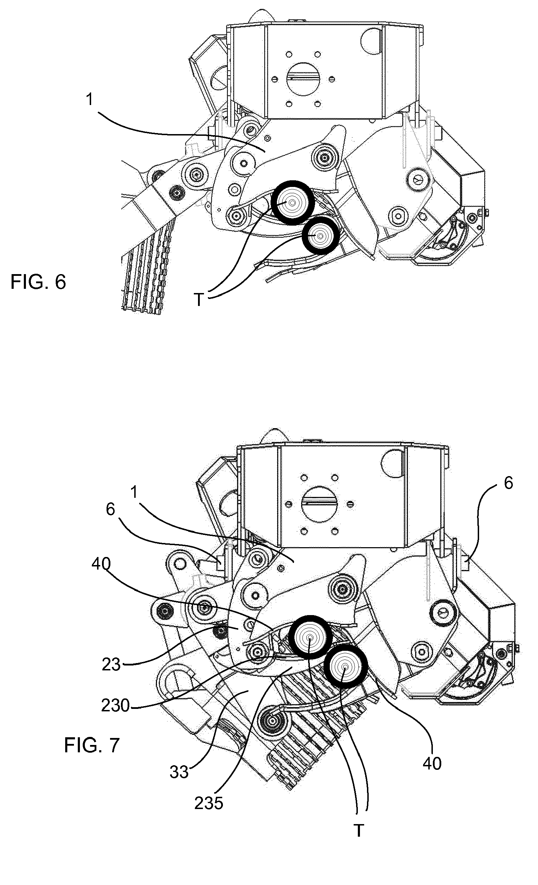

In fig. 4 the harvester head 1 is gripping the trunk T of the tree by a collector arm 23 (and possibly some other arms as in fig. 4 it is presented). Depending on the mode, when processing standing trees, after gripping the tree trunk is cut and then the harvested head will be steered to the proximity of the following tree. If it is processing already felled trees, after gripping a tree trunk the gripping procedure will be repeated. In fig. 5 the harvester head 1 is approaching the following tree T to be collected. This step is repeated until the number of trees T to be processed simultaneously is collected to the harvester head 1, like in an embodiment of fig. 6.

In fig. 7 it is presented an embodiment at the initial moment of the processing, the number of trees T to be processed simultaneously is collected to the harvester head 1, the feed roller arm 33 is closed and thus carrying and holding the tree trunks T so that the collector arm 23 (or the knife section 235) remains between the trees T. If applicable, the trees T are felled by using a harvester head tilt system 6, or the number of already felled trunks are collected. The feeding the tree trunks T simultaneously in longitudinal direction may now be performed. When fed i.e. the trunks T are moving through the harvester head 1, the harvester head 1 is debarking the trunks T with debarking knives 40 located on the inner periphery of the harvester head 1 and with the collector arm 23 provided with a debarking knife 230 and located between the tree trunks T. The collector arm 23 between the trees T is floating on the surface of the tree trunks T during the feeding due to the loading force of the feed roller arm 33. It may be done for example so that the loading force of the collector arm 23 is released and the surfaces of the trunks take care of the positioning of the collector arm. Also the harvester head 1 is provided with a feed roller arm 33 comprising a feed roller 30 and having a self-aligning function to ensure proper feeding grip of the feed roller on the tree trunks. This helps to balance the feeding force between the trunks to be processed. As the feeding of the trunks T progress, the cross cutting the tree trunks to a desired length is performed.

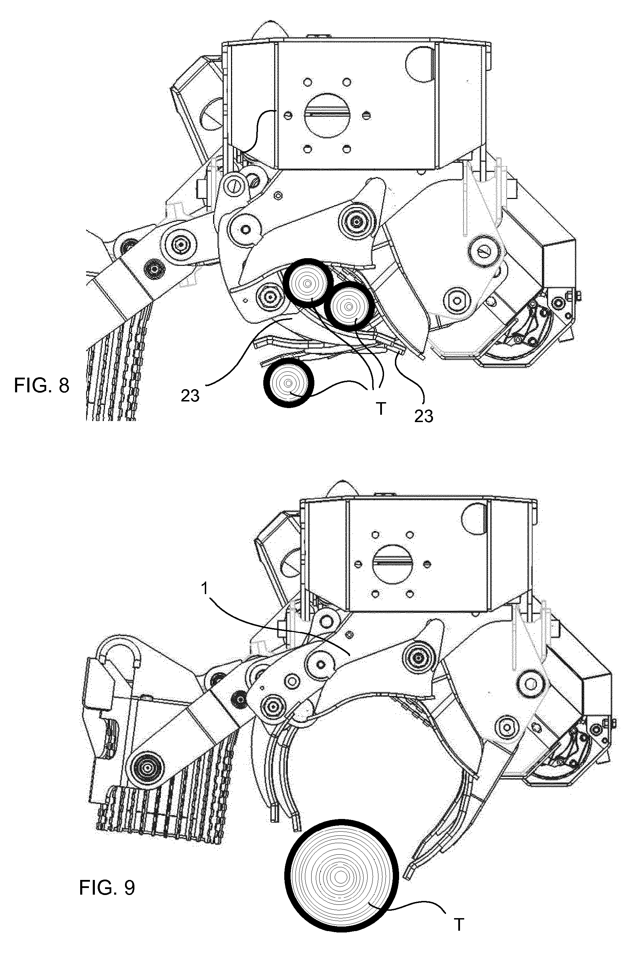

In fig. 8 it is presented an embodiment wherein the harvester head 1 is designed to process multiple trees simultaneously, the harvester head is provided with several collector arms 23 and the steps of steering the harvester head in the proximity of a tree and gripping the tree trunk by a collector arm 23 are repeated a number of times. The number of simultaneously processes tree trunks may be two, three, four, five or more. As it is presented in fig 8, the collector arms are not necessarily located between each trees during processing. The collector arm(s) may also be located between every, every second or every third collected tree trunk and possible alternatives of these. Then the contact between the trunks takes part to the debarking.

In fig. 9 it is presented as a curiosity that the harvester head according to the present invention does not deteriorate the functionality of the harvester head in processing single tree trunks i.e. one trunk at time. Sometimes it depends on the distance between the trunks which way is more effective, but when the trunks are close enough to each other, the present invention offers a significant improvement in the efficiency of processing small volume trees.

Also, especially when using an embodiment wherein the debarking process is enhanced or performed by simultaneously rotating the tree trunks in their axial direction and pressing the trees toward the surrounding debarking knives (or vice versa) and the collector arm between the tree trunks by the feed roller arm. This may be done for example so that the feed roller 30 is provided with a surface pattern, such as spiral like pattern, causing the tree trunk(s) to rotate axially or other manner causing an axial torque to the surface of the tree trunk bark when fed by the feed roller or like, such as feed track or feed stroking means when fed by the feed roller (not shown in figures). Said other manner is for example that the feed roller rotational axis is slightly deviating from the perpendicular position and thus causing torque to the tree trunk.

### Reference signs used in figures:

- 1: Harvester head
- 10: frame part
- 2: processing means - gripping
- 23: collector arm
- 230: debarking knife
- 231: cutting edge
- 232: friction surface
- 234: base section
- 235: knife section
- 236: pivot point
- 237: pivot point
- 238: bracket
- 3: processing means - feeding
- 30: feed roller
- 33: feed roller arm
- 4: processing means - debarking
- 40: debarking knives
- 5: processing means - cross cutting
- 6: harvester head tilt system

- T: tree, tree trunk
- B: bark

## Claims

1. A harvester head (1), comprising a frame part (10) and tree processing means (2, 3, 4, 5) for gripping a tree trunk (T), for feeding the tree trunk (T) in a longitudinal direction, for debarking and for cross cutting the tree trunk, **characterized in that** the harvester head (1) is adapted for processing at least two trees (T) simultaneously, the harvester head is provided with a collector arm (23) of dual function, both gripping function for gripping and holding a tree (T) during a collecting phase and debarking function, the collector arm (23) is provided with a debarking knife (30) for debarking at least two consequently collected trees (T) at an area between the two trees (T).

2. The harvester head according to patent claim 1, **characterized in that** the collector arm (23) is provided with a debarking knife (230) with a debarking function so that there is a cutting edge (231) for cutting bark (B) and limbs, but also a friction surface (232) to enable forming of pressure between the bark (B) surface of the tree trunk (T) and the debarking knife (230) for pressure debarking.

3. The harvester head according to patent claim 1, **characterized in that** the collector arm (23) comprises two sections, a base section (234) pivoted to the frame part (10) and a knife section (235) pivoted to the base section (234).

4. The harvester head according to patent claim 3, **characterized in that** the collector arm (23) is provided with an actuator over the pivot point between the base section (234) and the knife section (235) so that the collector arm (23) and the knife section (235) are controllably manoeuvrable.

5. The harvester head according to patent claim 1, **characterized in that** harvester head (1) is provided with several collector arms (23) for processing multiple trees (T) simultaneously.

6. The harvester head according to patent claim 1, **characterized in that** the harvester head (1) is provided with a feed roller arm (33) comprising a feed roller (30) and having a self-aligning function to ensure proper feeding grip of the feed roller (30) on the tree trunks (T).

7. The harvester head according to patent claim 6, **characterized in that** the feed roller (30) is provided with a surface pattern, such as spiral like pattern, causing the tree trunk(s) to rotate axially when fed by the feed roller (30).

8. A method in processing at least two tree trunks (T) simultaneously with a harvester head (1) comprising following steps:
- steering the harvester head frame base (100) in the proximity of a tree trunk (T),
- gripping the trunk (T) of the tree by a collector arm (23),
- moving the harvester head (1) holding the tree trunk (1) to the proximity of the selected following tree (T),
- closing a feed roller arm (23) and thus carrying and holding the tree trunks (T) so that the collector arm (23) remains between the trees (T),
- feeding the tree trunks (T) simultaneously in longitudinal direction,
- debarking the tree trunks (T) with debarking knives (40) located on the inner periphery of the harvester head (1) and with the collector arm (23) provided with a debarking knife (230) and located between the tree trunks (T),
- cross cutting the tree trunks (T) to a desired length.

9. The method according to patent claim 8, **characterized in that** when processing standing trees (T), after gripping the tree trunk (T) is cut and when the number of trees (T) to be processed simultaneously is collected to the harvester head (1), the trees (T) are felled by using a harvester head tilt system (6) and then the tree trunks (6) are processed i.e. debarked and cross cut to a desired length.

10. The method according to patent claim 8, **characterized in that** when processing already felled trees (T), after gripping a tree trunk (T) the gripping procedure is repeated until the number of trees (T) to be processed simultaneously is collected to the harvester head (T), then the tree trunks (T) are processed i.e. debarked and cross cut to a desired length.

11. The method according to patent claim 8, **characterized in that** the debarking process is performed by simultaneously rotating the tree trunks (T) in their axial direction and pressing the tree trunks (T) toward the surrounding debarking knives (40) and the collector arm (23) between the tree trunks by the feed roller arm (33).

12. The method according to patent claim 8, **characterized in that** the harvester head (1) is designed to process multiple trees (T) simultaneously, the harvester head (1) is provided with several collector arms (23) and the steps of steering the harvester head (1) in the proximity of a tree (T) and gripping the tree trunk (T) by a collector arm (23) are repeated a number of times.

13. The method according to patent claim 8, **characterized in that** the collector arm (23) between the tree trunks (T) is floating on the surface of the tree trunks (T) during the feeding due to the loading force of the feed roller arm (33).

14. The method according to patent claim 8, **characterized in that** the number of simultaneously processes tree trunks (T) is two, three, four, five or more.

15. The method according to patent claim 14, **characterized in that** the collector arm(s) (23) are located between every, every second or every third collected tree trunk (T) and possible alternatives of these.
